# EUROPÄISCHE PATENTSCHRIFT

(11) **EP 3 269 543 B1**
(45) Veröffentlichungstag und Bekanntmachung des Hinweises auf die Patenterteilung: **01.07.2020**
(21) Anmeldenummer: 17180915.5
(22) Anmeldetag: 12.07.2017
(51) Int. Cl.: B32B 7/12, B32B 27/10, B32B 27/20, B32B 27/40, B32B 37/00, B32B 3/06

(54) **PANEEL**
PANEL
PANNEAU

(30) Priorität: 12.07.2016 DE 102016112791
(43) Veröffentlichungstag der Anmeldung: 17.01.2018
(73) Patentinhaber: Schulte, Guido, 59602 Rüthen-Meiste (DE)
(72) Erfinder: Schulte, Guido, 59602 Rüthen-Meiste (DE)
(74) Vertreter: Griepenstroh, Jörg

(56) Entgegenhaltungen:
- DE-B4- 10 316 886
- DE-U1- 8 115 799
- US-A1- 2004 121 161
- US-A1- 2014 329 062

## Beschreibung

Die Erfindung betrifft ein Paneel mit den Merkmalen des Patentanspruchs 1.

Aus der EP 30 20 885 A1 ist es bekannt, ein Paneel zur Ausbildung eines wasserfesten Bodens zu schaffen, wobei das Paneel einen Kern aus einem thermoplastischen Material, eine feste Deckschicht sowie eine Verstärkungsschicht zwischen der Deckschickt und dem Kern besitzt. Das Material des Kerns ist vorzugsweise PVC, PE oder ABS. Die Verstärkungsschicht enthält vorzugsweise PVC und/oder PE und ist vorzugsweise hart. Die Verstärkungsschicht ist vorzugsweise mit dem Kern verschweißt oder verklebt.

Die DE 81 15 799 U1 offenbart Paneele zu isolierenden Innenverkleidung von Gebäudedecken und/oder -wänden. Zur besseren Wärmeisolierung können die Trägerplatten aus geschlossenporigem Polyurethan-Schaum bestehen, wobei sie auf ihrer für das Auge sichtbaren Fläche mit Echtholz-Furnieren beschichtet sind. Auf der Rückseite wird ein Gegenzugpapier aufgebracht um die Stabilität zu erhöhen. Die Verbindung benachbarter Trägerplatten kann über parallel zueinander liegende Nuten erfolgen. Das geschlossenporige Material bewirkt, dass wenig Feuchtigkeit aufgenommen werden kann. Die Platten sollen aufgrund ihrer hängenden Lage naturgemäß sehr formstabil sein. Ein hohes Gewicht dieser Platten ist dagegen eher ungünstig.

Die US 2004/121161 A1 offenbart einen Kompositwerkstoff zur Herstellung von Waschtischen. Polyurethan soll beispielsweise mit Sand gemischt werden. Dadurch kann das Gewicht des Waschtisches erhöht werden. Der Klang und die Haptik des Waschtisches verbessert sich, weil der Eindruck entsteht, der oberflächlich beschichtete Waschtisch bestehe aus Stein, was von den Konsumenten bevorzugt wird. Der Kunststoff ist nicht elastisch oder biegsam.

In der US 2014/329062 A1 werden Mehrzweckfliesen beschrieben, die eine Basisschicht aus Schaum sowie eine Deckschicht besitzen. Die Fliese soll leicht sein und eine besonders geringe Dichte haben, sodass sie leicht verlegt werden kann und gehandhabt werden kann. Bei Fliesen spielt die Formstabilität eine große Rolle. Insbesondere darf sich die Fliese nicht verwerfen. Die oberflächliche Schicht ist daher besonders fest. Um das Gewicht der Fliese gleichzeitig gering zu halten, besitzt der Schaum, der vorzugsweise aus PVC besteht, vorzugsweise eine Dichte um 1 g/cm³.

Die DE 103 16 886 B4 offenbart einen elastischen Bodenbelag und ein Verfahren zu dessen Herstellung. Ein elastischer Kern des Bodenbelags wird von der Rückseite her mit einem Schwerrücken versehen, beispielsweise mit einer schalldämpfenden Unterlage, etwa einem Sand-Polyurethan-Gemisch. Die Deckschicht ist duroplastisch, während die Basisschicht elastisch verformbar ist und beim Verpressen die Funktion eines Presspolsters übernimmt, sodass eine gleichmäßige Aushärtung der Kunstharzfilme ermöglicht wird. Dieser Bodenbelag soll mit einem Rollendurchmesser von wenigstens 150 mm aufgewickelt werden können. Bevorzugt besitzt die Deckschicht ein Melaminharz-getränktes Overlay, wobei der Kern mit der dekorativen Deckschicht aus duroplastischen Material zu einer Einheit verpresst ist, wobei die duroplastische Deckschicht ausgehärtet und mit dem Kern verbunden wird. Die Biegsamkeit eines solchen elastischen Bodenbelages ist durch die duroplastische Deckschicht eingeschränkt. Der Erfindung liegt die Aufgabe zugrunde, ein industriell herstellbares Paneel aufzuzeigen, das mit weiteren Paneelen zu einem Belag verbunden werden kann, um eine Fläche eines Raumes zu bedecken, insbesondere den Boden.

Patentanspruch 1 beschreibt ein solches Paneel.

Ein Verfahren zur Herstellung eines solchen Paneels ist Gegenstand des Patentanspruchs 7.

Das Paneel besitzt eine Oberseite, eine Unterseite und wenigstens vier Randseiten. Die Randseiten sind dazu ausgebildet, mit weiteren Paneelen verbunden zu werden, um eine Fläche eines Raumes zu bedecken. An wenigstens einem Paar gegenüberliegender Randseiten sind Kupplungen zum Verbinden mit benachbarten Paneelen ausgebildet. Die Paneele können an den Seitenrändern Fasen aufweisen. Die Fasen sind als abgeschrägte Seitenkanten oder als Stufenfalz ausgeführt. Die Fasen oder Falzausführungen können verschiedene dekorative Gestaltungsformen oder Farben, abweichend von der eigentlichen Oberflächenfarbe oder -gestaltung aufweisen. Das erfindungsgemäße Paneel besitzt einen Mehrschichtaufbau. Es umfasst eine elastische Basisschicht, an welcher zumindest teilweise die Kupplungen ausgebildet sind, insbesondere in Form von Nut und Feder. Die Verbindung ist vorzugsweise spielfrei. Die Basisschicht besteht vollständig oder überwiegend aus einem elastisch eingestellten Polyurethan. Der Polyurethananteil der Basisschicht selbst ist in jedem Fall elastisch eingestellt. Es sind weniger elastische Zuschlagstoffe in das Polyurethan eingebettet, wobei die Basisschicht insgesamt elastisch bleibt. Die Basisschicht aus dem elastisch eingestellten Polyurethan enthält Zuschlagstoffe auf mineralischer Basis oder auf Basis derer synthetischen Äquivalente, beispielsweise feinkörnige, mineralbasierte Zuschlagstoffe. Auf diese Weise wird die Dichte der Basisschicht größer als 1,8 g/cm³ eingestellt. Das erfindungsgemäße Paneel behält seine elastomeren Eigenschaften auch dann, wenn das Eigengewicht erhöht ist. Oberhalb der Basisschicht ist eine im Vergleich mit der Basisschicht weniger elastische Deckschicht angeordnet. Die Deckschicht ist über eine Klebstoffschicht mit der Basisschicht zu dem Mehrschichtaufbau verpresst.

Das erfindungsgemäße Paneel auf Polyurethanbasis soll im Wesentlichen elastomere Eigenschaften besitzen. Ein solches Paneel ist biegsam und insbesondere bruchfrei biegsam, bei einem Rollendurchmesser größer oder gleich 50 mm, bzw. einem Biegeradius von mindestens 25 mm. Durch die Elastomereigenschaften besitzt ein solches Paneel eine gute Eindruckbeständigkeit. Zudem soll sich auch die Klebstoffschicht nachgiebig verhalten. Die Klebstoffschicht soll aus einem thermoplastisch eingestellten Polyurethan, einem Polyamid oder aus einem Polyester bestehen. Das Ausgangsprodukt der Klebstoffschicht wird vor dem Verpressen der Deckschicht mit der Basisschicht als Film oder Pulver zwischen der Deckschicht und der Basisschicht angeordnet.

Die Deckschicht ist mehrlagig. Sie besitzt wenigstens eine Dekorschicht und wenigstens eine oberhalb der Dekorschicht angeordnete Schutzschicht. Die Dekorschicht ist vorzugsweise auf Basis von Zellulose hergestellt. Die Dekorschicht kann mehrere Lagen von auf Zellulose basierenden Schichten aufweisen. Es handelt sich vorzugsweise bei der wenigstens einen auf Zellulose basierenden Schicht um eine Schicht aus Papier, wobei eine obere der wenigstens zwei Schichten eine dekorative Oberfläche besitzt. Die wenigstens eine Dekorschicht ist vorzugsweise mit einem aushärtbaren Kunstharz imprägniert. Hierbei handelt es sich vorzugsweise um ein aminoplastisches Harz, ein Melaminharz, ein Polyurethan oder um ein Gemisch der zuvor genannten Stoffe. Der Gewichtsanteil der Imprägnierung beträgt 70 bis 130 Gewichtsprozent. Die Dekorschicht kann eine Struktur haben, die synchron zum Dekorbild passt. Die Oberfläche des fertigen Paneels kann unterschiedliche Glanzgrade aufweisen, vorzugsweise 3 bis 4 unterschiedliche Glanzgrade, passend zu dem oder abgestimmt auf das Dekorbild. Je nach Anzahl der Dekorschichten hat die Deckschicht eine Dicke in einem Bereich von 0,10 bis 0,50 mm.

Die Schutzschicht oberhalb der Dekorschicht enthält vorzugsweise antiabrasive Bestandteile. Es kann sich bei der Schutzschicht, die auch als Overlay bezeichnet wird, um eine Schicht aus imprägnierter Edelzellulose handeln. Diese wird beim Verpressen transparent. Die Schutzschicht kann alternativ auch als flüssige Schicht oder als Pulver auf die Dekorschicht appliziert sein und verbindet sich beim Verpressen mit der Dekorschicht.

Erfindungsgemäß werden alle Komponenten, das heißt, von oben nach unten betrachtet, die Schutzschicht (Overlay), die wenigstens eine Dekorschicht, die Klebstoffschicht und die Basisschicht in einem einzigen Arbeitsgang miteinander verpresst. Als Klebstoff zwischen der Deckschicht und der Basisschicht fungiert nicht das Harz aus der imprägnierten Dekorschicht, sondern ergänzend bzw. ausschließlich die Klebstoffschicht. Das heißt, es wird ergänzend zur Dekorschicht, bei der es sich bevorzugt um ein imprägniertes Dekorpapier handelt, eine Klebstoffschicht z.B. als Film, pulverförmig oder als pastöses Hotmelt aufgetragen. Die Klebstoffschicht wird mit einer Menge von mindestens 15 g/m² aufgetragen, vorzugsweise mindestens 60 g/m².

Das ist ein Unterschied gegenüber üblichen Laminataufbauten, mit HDF-Platten. Die vorgefertigten Teile des erfindungsgemäßen Paneels sind mithin die Basisschicht und die Dekorschicht, die auch dekorative Komponente der Deckschicht bezeichnet werden können. Die Presszeit der Bauteile beträgt 8 bis 30 Sekunden. Die Temperatur an der Pressfläche eines dekorseitigen Pressbleches liegt dabei zwischen 150°C und 220°C. Nach heutigem Stand der Technik lassen sich aminoplastisch imprägnierte Dekorpapiere oder Oberflächenmaterialien nur mit Holzwerkstoffplatten in deinem Arbeitsgang "direkt" mit der Platte verpressen und dabei die Oberflächen aushärten und prägen. Im Rahmen der beschriebenen neuen Erfindung ist das auch mit einer wasserfesten Basisschicht aus Polyurethan möglich, allerdings unter Zuhilfenahme eines auf Wärme und Druck aktivierbaren Klebstoffes, vorzugsweise eines Klebstoffes auf Pulverbasis. Der Klebstoff wird bezüglich seiner Filmaktivierungstemperatur und der Wärmeeinwirkdauer auf die Reaktionsbedingungen der dekorativen Oberschicht, inklusive der Schutzschicht abgestimmt.

Die elastische Basisschicht aus Polyurethan kann zumindest teilweise eine Schaumstruktur haben. Die Dicke der Basisschicht beträgt vorzugsweise zwischen 2 und 20 mm, insbesondere zwischen 3 und 8 mm.

Die Basisschicht aus Polyurethan kann vor dem Verpressen mit der Dekorschicht angeschliffen oder angeraut werden. Dies ist für nachfolgende Verklebungen besonders vorteilhaft, dass sich die Klebstoffe besser in der Polyurethanschicht verkrallen können. Der Schleifvorgang kann auch sinnvoll sein, um Plattenunebenheiten zu egalisieren. In einer besonderen Ausführungsform wird die angeschliffene Polyurethan-Basisschicht noch vor dem Verkleben mit einem Primer /Haftvermittler beaufschlagt

Anders als bei herkömmlichen Laminatverpressungen benötigt das erfindungsgemäße Vorprodukt des Paneels, das noch nicht mit randseitigen Kupplungen versehen ist, beim Verpressen lediglich oberseitige Hitze zum Verbinden der Deckschicht mit der Basisschicht. Da die Basisplatte aus Polyurethan Hitze sehr gut leitet und speichert, wird die gepresste Platte erweicht, ohne dass die Bindemittelstruktur des Polyurethans zerstört wird. Diese im heißen Zustand relativ weiche Basisschicht dient gleichzeitig als nachgiebiges Kissen oder Presspolster. Die Nachgiebigkeit der Basisschicht ermöglicht die Herstellung tiefer Strukturen in der Oberfläche der gepressten Platte, ohne dass dafür entsprechend dicke Decklagen eingebracht werden müssen. Die Basisschicht gleicht während des Pressvorgangs die Erhöhungen und Vertiefungen in der Pressplatte aus. Weil die PUR-Basisplatte jedoch elastomere Eigenschaften hat, federt die Basisschicht nach der Entlastung zurück und wird im Wesentlichen nicht durch die Struktur des Pressbleches geprägt. Die Oberflächenstruktur wird in der Deckschicht und im gewissen Umfang in der Klebstoffschicht ausgebildet.

Es ist zweckmäßig, wenn die nach dem Verpressen heiße Platte für einen kurzen Zeitraum, insbesondere für mindestens zehn Sekunden zur Abkühlung ausgelagert oder sogar aktiv gekühlt wird. Die gepresste Platte nimmt Wärme relativ schnell auf, gibt sie allerdings auch schnell wieder ab. Die Lagerung der gekühlten Platten erfolgt in gestapelter Form vorzugsweise erst nach dem Auskühlen bzw. aktiven Abkühlen.

Alternativ kann die Kühlung auch durch gekühlte Walzenkalander geschehen, insbesondere dann, wenn die Verpressung der Elemente auf kontinuierlich arbeitenden Pressenanlagen erfolgt.

Nach dem Pressen und Auskühlen werden die so hergestellten Platten zugeschnitten und randseitig bearbeitet, so dass die Paneele entstehen. Hierbei können an einem Paar gegenüberliegender Randseiten Kupplungen zum Verbinden mit benachbarten Paneelen ausgebildet werden. Die Kupplungen sind dafür vorgesehen, Verlagerungen innerhalb der Verlegeebene oder senkrecht zur Verlegeebene zu verhindern.

Zusätzlich kann lediglich aus optischen Gesichtspunkten an einer Unterseite der Platte oder des Paneels, eine Beschichtung aufgebracht werden. Auch eine Trittschallkaschierung kann an der Unterseite appliziert werden. Zusätzlich oder optional kann an der Unterseite eine Antirutschbeschichtung befestigt sein. Auch eine werkseitig applizierte Klebstoffschicht ist möglich. Die Klebstoffschicht hilft bei einer Fixierung oder Verklebung mit einem Untergrund.

Die erfindungsgemäßen Paneele benötigen keinen Gegenzug an der Unterseite. Die Komponenten der Deckschicht und auch die Klebstoffschicht bauen keine Zugspannungen unter üblichen Nutzungsbedingen auf, die nicht durch das Paneel selbst aufgenommen werden können, insbesondere wenn das Paneel ein sehr hohes Eigengewicht besitzt. Aus diesem Grund kann auch ein Gegenzug an der Unterseite des Paneels entfallen.

Das erfindungsgemäße Paneel ist vorzugsweise wasserfest und kann schwimmend verlegt werden. Die Paneele sind biegsam und keinesfalls starr. Der Grad der Biegsamkeit kann über die elastomeren Eigenschaften des Polyurethan-Werkstoffs der Basisschicht eingestellt werden. Es handelt sich bei dem Material der Basisschicht nicht um einen thermoplastischen Werkstoff, damit im verlegten Zustand auch bei punktueller Sonneneinstrahlung oder lokaler Erwärmung nur eine geringe, bzw. am Fertigprodukt unter üblichen Wohnbedingungen keine wahrnehmbare, thermisch bedingte Ausdehnung des Paneels bemerkbar wird. Optional können Mittel zur Verbesserung der Abrasionsbeständigkeit oder Erhöhung der Schlagfestigkeit und Steifigkeit im Zusammenhang mit der Dekorschicht zum Einsatz kommen, beispielsweise im Zusammenhang mit dem Overlay. Aber auch in diesem Fall befinden sich die Mittel zur Erhöhung der Widerstandsfähigkeit der erfindungsgemäßen Paneele oberhalb der Klebstoffschicht, die vorzugsweise ebenfalls aus einem Polyurethan besteht.

Zusammengefasst handelt es sich bei dem erfindungsgemäßen Paneel um eine Polyurethan-Elastomerplatte, bei welcher imprägnierte Dekorpapiere zu einem Produkt mit der Basisschicht aus Polyurethan verbunden sind, wobei sich die so hergestellte Platte bzw. das Paneel nicht starr, sondern insgesamt biegsam verhält.

Das erfindungsgemäße Paneel ist nicht in dem Sinne elastisch, dass es in Längs- und Querrichtung, das heißt innerhalb der Verlegeebene größer 10% gedehnt oder größer 5% gestaucht werden kann. Nachgiebigkeiten senkrecht zur Verlegeebene und insbesondere innerhalb der Deckschicht sind unerwünscht. Allerdings kommt die Erfindung ohne Verstärkungsschicht im Bereich der Dekorschicht aus. Die Deckschicht kann besonders einfach zusammen mit der Basisschicht hergestellt werden, so dass keine bereits fertig verpressten Deckschichten, wie z. B. Folienbeläge auf eine PUR-Platte geklebt werden müssen. Die verschleißfeste Schutzschicht (Overlay), die Dekorschicht und die Klebstoffschicht werden mit der Basisschicht gemeinsam in einem Arbeitsschritt beim Verpressen aktiviert und ausgehärtet.

Eine Besonderheit der Erfindung ist, dass eine Basisschicht aus PUR mit höheren Dämmwerten und einen relativ starre, imprägnierte, papierbasierte Dekorschicht so aufeinander abgestimmt sind, dass die gewünschte Biegung oder Stauchung möglich wird. Das gelingt durch die erfindungsgemäß vorgesehen Kleberschicht und durch die aufeinander abgestimmten Festigkeitswerte bzw. Dehnungseigenschaften der verwendeten Werkstoffe.

Wenn das Paneel dekorseitig nach oben gebogen wird, dehnt sich die elastomer eingestellte PUR-Basisschicht, während die Dekorseite eher gestaucht wird. Da die Dekorseite aufgrund der aminoplastisch und/oder durch Polyurethan imprägnierten Dekorlage unempfindlich gegen thermische Einflüsse ist, verhält sich das Produkt insgesamt formstabil. Bei Fußbodenheizungen sind Temperaturen bis 30°C unkritisch. Zumeist ist die Unterseite des Paneels kühler als die Oberseite, so dass sich die Unterseite bei regulärer Verwendung nicht stärker dehnt als die Oberseite. Die Abstimmung und Auswahl der Werkstoffe sind wichtige Merkmale für den Erfolg der Erfindung.

Der gesamte Aufbau ist im Unterschied zu Laminatböden als wasserfest zu verstehen. Das Produkt nimmt maximal 5 % Wasser auf, und neigt bei einer Feuchtigkeitsaufnahme bis maximal 3% nicht zum Quellen.

Die Kantenquellungen liegen nach 24 h Wasserlagerung bei kleiner 3%. Der Aufbau kann als anschmiegsam bezeichnet werden, so dass sich beim Verlegen keine Hohlräume zum Unterboden, z.B. zum Estrich ausbilden. Daher ist ein aus diesen Paneelen gebildeter Boden beim Begehen sehr leise. Es gibt keinen Resonanzhohlraum. Unebenheiten bis 1 mm werden überbrückt und zeichnen sich nicht im Oberbelag bei der Nutzung durch. Das ist ein besonders vorteilhafter Aspekt im Vergleich zu Produkten mit einer thermoplastischen Basisschicht. Vorteilhaft ist ein Aufbau, bei dem die Papiere in der Dekorschicht elastisch imprägniert sind, aber nicht thermoplastische reagieren. Die Erfindung vereint die Vorteile eines starren Laminatbodens mit denen von Böden aus wasserfesten, thermoplastischen Werkstoffen.

## Patentansprüche

1. Paneel, dessen Randseiten dazu ausgebildet sind, mit weiteren Paneelen verbunden zu werden, um eine Fläche eines Bodens eines Raumes zu bedecken, wobei das Paneel eine Oberseite, eine Unterseite und wenigstens vier Randseiten besitzt, wobei an wenigstens einem Paar gegenüberliegender Randseiten Kupplungen zum Verbinden mit benachbarten Paneelen ausgebildet sind, wobei das Paneel einen Mehrschichtaufbau besitzt mit einer elastischen Basisschicht, an welcher zumindest teilweise die Kupplungen ausgebildet sind, und mit einer gegenüber der Basisschicht weniger elastischen Deckschicht oberhalb der Basisschicht, wobei die Deckschicht über eine elastische Klebstoffschicht mit der Basisschicht zu dem Mehrschichtaufbau verpresst ist, wobei die Basisschicht aus einem elastisch eingestellten Polyurethan Zuschlagstoffe auf mineralischer Basis oder auf Basis derer synthetischen Äquivalente enthält, so dass die Dichte der Basisschicht größer als 1,8 g/cm³ eingestellt ist, wobei die Deckschicht wenigstens eine Dekorschicht und wenigstens eine oberhalb der Dekorschicht angeordnete Schutzschicht aufweist, und wobei die Dekorschicht auf Basis von Zellulose hergestellt ist und mit einem aushärtbaren Kunstharz imprägniert ist, welches ein aminoplastisches Harz, ein Melaminharz, ein Polyurethan oder ein Gemisch der genannten Stoffe enthält, wobei das Paneel um seine gegenüber der Basisschicht weniger elastische Deckschicht zur Oberseite hin biegbar ist, wobei der von der Oberseite des Paneels gemessene kleinste Biegeradius, bis zu dem eine zerstörungsfreie Biegung des Paneels möglich ist, 25 mm beträgt.

2. Paneel nach Anspruch 1, **dadurch gekennzeichnet, dass** die Klebstoffschicht von einem thermoplastischen Polyurethan, einem Polyamid oder aus einem Polyester besteht und vor dem Verpressen der Deckschicht mit der Basisschicht als Film oder als Pulver zwischen der Deckschicht und der Basisschicht angeordnet ist.

3. Paneel nach Anspruch 1, **dadurch gekennzeichnet, dass** die Schutzschicht antiabrasive Bestandteile enthält.

4. Paneel nach einem der Ansprüche 1 bis 3, **dadurch gekennzeichnet, dass** an einer Unterseite der Basisschicht eine Trittschall dämpfende Schicht angeordnet ist.

5. Paneel nach einem der Ansprüche 1 bis 4, **dadurch gekennzeichnet, dass** an seiner Unterseite eine Anti-Rutsch-Schicht oder eine Klebstoffschicht angeordnet ist.

6. Paneel nach Anspruch 1, **dadurch gekennzeichnet, dass** es frei von einem stabilisierenden unterseitigen Gegenzug ist.

7. Verfahren zur Herstellung eines Paneels mit den Merkmalen eines der vorangegangen Ansprüche 1 bis 6 mit folgenden Schritten:
a. Bereitstellen einer Basisschicht, aus einem elastisch eingestellten Polyurethan mit Zuschlagstoffen auf mineralischer Basis oder auf Basis derer synthetischen Äquivalente ;
b. Bereitstellen und Anordnen einer Deckschicht oberhalb der Basisschicht, wobei die Deckschicht unter Eingliederung einer Klebstoffschicht auf der Basisschicht aufliegt, wobei die Deckschicht wenigstens eine Dekorschicht und wenigstens eine oberhalb der Dekorschicht angeordnete Schutzschicht aufweist;
c. Verpressen der Deckschicht mit der Basisschicht, wobei die Klebstoffschicht unter Einfluss von Wärme, die von der Presse wenigstens in die Deckschicht eingebracht wird, zu dem Mehrschichtaufbau verpresst wird.

8. Verfahren nach Anspruch 7, **dadurch gekennzeichnet, dass** das Verpressen bei Temperaturen in einem Bereich von 150 °C bis 220 °C erfolgt, wobei diese Temperatur an der Oberfläche eines Pressbleches eingestellt wird, das mit dem Paneel in Kontakt gebracht wird.

9. Verfahren nach Anspruch 7 oder 8, **dadurch gekennzeichnet, dass** die besagte Temperatur nur an einem einzigen Pressblech eingestellt wird, welches mit der Deckschicht in Kontakt kommt.

10. Verfahren nach einem der Ansprüche 7 bis 9, **dadurch gekennzeichnet, dass** die Presszeit 8 bis 30 Sekunden beträgt.

11. Verfahren nach einem der Ansprüche 7 bis 10, **dadurch gekennzeichnet, dass** der durch Verpressen hergestellte Mehrschichtaufbau unmittelbar nach der Entnahme aus der Presse für mindestens 10 Sekunden auskühlt.

12. Verfahren nach einem der Ansprüche 7 bis 11, **dadurch gekennzeichnet, dass** das Pressblech eine Oberflächenstruktur besitzt, die in die Deckschicht übertragen wird, wobei die Struktur in dem fertigen Paneel nur in der Deckschicht und optional zusätzlich in der Klebstoffschicht ausgebildet wird.

13. Verfahren nach einem der Ansprüche 7 bis 12, **dadurch gekennzeichnet, dass** eine Dicke der Deckschicht abhängig von der Dicke und Anzahl von Lagen von auf Basis von Zellulose hergestellten Schichten und der oberseitigen Schutzschicht auf 0,1 bis 0,5 mm eingestellt wird.

14. Verfahren nach einem der Ansprüche 7 bis 13, **dadurch gekennzeichnet, dass** die Schutzschicht vor dem Verpressen in flüssiger Form oder als Pulver auf die Oberseite der Deckschicht aufgetragen wird.

15. Verfahren nach einem der Ansprüche 7 bis 14, **dadurch gekennzeichnet, dass** zur Ausbildung der Klebstoffschicht ein Film oder ein Pulver aus den zu verschmelzenden und auszuhärtenden Werkstoffen der Klebstoffschicht zwischen der Basisschicht und der Deckschicht angeordnet wird.

## Claims

1. Panel, the edge sides of which are designed to be connected with further panels in order to cover a surface of a floor of a room, wherein the panel has a top side, a bottom side and at least four edge sides, wherein at at least one pair of oppositely-located edge sides are formed couplings for connecting with adjacent panels, wherein the panel has a multi-layer construction having a resilient base layer, on which the couplings are at least partially formed, and having a cover layer, less resilient than the base layer, above the base layer wherein the cover layer is pressed together with the base layer via a resilient adhesive layer to form the multi-layer construction, wherein the base layer made from an elastically adjusted polyurethane contains aggregates on a mineral basis or on the basis of their synthetic equivalents, such that the density of the base layer is set to be greater than 1.8 g/cm³, wherein the cover layer has at least one decorative layer and at least one protective layer disposed above the decorative layer, and wherein the decorative layer is manufactured on the basis of cellulose and is impregnated with a curable synthetic resin which contains an aminoplastic resin, a melamine resin, a polyurethane or a mixture of the mentioned substances, wherein the panel is bendable about its cover layer, less resilient in comparison to the base layer, towards the top side, wherein the smallest bend radius measured from the top side of the panel, until which a non-destructive bending of the panel is possible, is 25 mm.

2. Panel according to claim 1, **characterised in that** the adhesive layer consists of a thermoplastic polyurethane, a polyamide or a polyester and prior to the pressing of the cover layer with the base layer is disposed as a film or as a powder between the cover layer and the base layer.

3. Panel according to claim 1, **characterised in that** the protective layer contains antiabrasive components.

4. Panel according to any of claims 1 to 3, **characterised in that** on the bottom side of the base layer is disposed an impact sound absorbing layer.

5. Panel according to any of claims 1 to 4, **characterised in that** on its bottom side is disposed an anti-slip layer or an adhesive layer.

6. Panel according to claim 1, **characterised in that** it is free from a stabilising bottom-side countertraction.

7. Method for manufacturing a panel with the characteristics of one of the preceding claims 1 to 6 having the following steps:
a) provision of a base layer made from an elastically adjusted polyurethane containing aggregates on a mineral basis or on the basis of their synthetic equivalents;
b) provision of and disposition of a cover layer above the base layer, wherein the cover layer with the inclusion of an adhesive layer lies on the base layer, wherein the cover layer has at least one decorative layer and at least one protective layer disposed above the decorative layer;
c) pressing of the cover layer with the base layer, wherein the adhesive layer is pressed under influence of heat, which is introduced from the press at least into the cover layer, to form the multi-layer construction.

8. Method according to claim 7, **characterised in that** the pressing takes place at temperatures in a range from 150°C to 220°C, wherein this temperature is set at the surface of a pressing plate which is brought into contact with the panel.

9. Method according to claim 7 or 8, **characterised in that** the said temperature is set only at one single pressing plate which comes into contact with the cover layer.

10. Method according to any of claims 7 to 9, **characterised in that** the pressing time is 8 to 30 seconds.

11. Method according to any of claims 7 to 10, **characterised in that** the multi-layer construction produced by the pressing is cooled for at least 10 seconds immediately after being removed from the press.

12. Method according to any of claims 7 to 11, **characterised in that** the pressing plate has a surface structure which is transferred into the cover layer, wherein the structure is formed in the finished panel only in the cover layer and, optionally, additionally in the adhesive layer.

13. Method according to any of claims 7 to 12, **characterised in that** a thickness of the cover layer, depending on the thickness and number of piles of layers produced on the basis of cellulose, and of the top-side protective layer is set to 0.1 to 0.5 mm.

14. Method according to any of claims 7 to 13, **characterised in that** the protective layer is applied in fluid form or as powder onto the top side of the cover layer prior to the pressing.

15. Method according to any of claims 7 to 14, **characterised in that** for forming the adhesive layer a film or a powder made of the materials, to be melted and cured, of the adhesive layer is disposed between the base layer and the cover layer.

## Revendications

1. Panneau, dont les côtés de bord sont conçus pour être connectés à d'autres panneaux afin de couvrir une surface d'un plancher d'une pièce, dans lequel le panneau présente un côté supérieur, un côté inférieur et au moins quatre côtés de bord, dans lequel des raccords pour une connexion avec des panneaux voisins sont formés au niveau d'au moins une paire de côtés de bord opposés, dans lequel le panneau présente une structure multicouche avec une couche de base élastique, sur laquelle les raccords sont au moins partiellement formés, et avec une couche de recouvrement qui est moins élastique que la couche de base au-dessus de la couche de base, dans lequel la couche de recouvrement est pressée avec la couche de base pour former la structure multicouche au moyen d'une couche adhésive élastique, dans lequel la couche de base en polyuréthane ajusté élastiquement comprend des additifs sur une base minérale ou sur la base de leurs équivalents synthétiques, de telle sorte que la densité de la couche de base est réglée pour être supérieure à 1,8 g/cm³, dans lequel la couche de recouvrement présente au moins une couche décorative et au moins une couche protectrice disposée au-dessus de la couche décorative, et dans lequel la couche décorative est fabriquée à base de cellulose et est imprégnée d'une résine synthétique durcissable qui contient une résine aminoplastique, une résine de mélamine, un polyuréthane ou un mélange des substances mentionnées contient, dans lequel le panneau peut se courber vers le côté supérieur par sa couche de recouvrement, qui est moins élastique que la couche de base, dans lequel le plus petit rayon de courbure mesuré à partir du côté supérieur du panneau, tant qu'une flexion non destructive du panneau soit possible, est de 25 mm.

2. Panneau selon la revendication 1, **caractérisé en ce que** la couche adhésive est constituée d'un polyuréthane thermoplastique, d'un polyamide ou d'un polyester et est agencée avant le pressage de la couche de recouvrement avec la couche de base sous forme de film ou de poudre entre la couche de recouvrement et la couche de base.

3. Panneau selon la revendication 1, **caractérisé en ce que** la couche protectrice contient des composants anti-abrasifs.

4. Panneau selon l'une des revendications 1 à 3, **caractérisé en ce qu'**une couche amortissant les bruits de pas est agencée sur un côté inférieur de la couche de base.

5. Panneau selon l'une des revendications 1 à 4, **caractérisé en ce qu'**une couche antidérapante ou une couche adhésive est agencée sur son côté inférieur.

6. Panneau selon la revendication 1, **caractérisé en ce qu'**il est dépourvu de contrepartie de stabilisation sur le dessous.

7. Procédé de fabrication d'un panneau présentant les caractéristiques de l'une des revendications 1 à 6 précédentes, comprenant les étapes consistant à :
a. fournir une couche de base, faite d'un polyuréthane ajusté élastiquement avec des additifs sur une base minérale ou sur la base de leurs équivalents synthétiques ;
b. fournir et agencer une couche de recouvrement au-dessus de la couche de base, dans lequel la couche de recouvrement repose sur la couche de base avec l'incorporation d'une couche adhésive, dans lequel la couche de recouvrement présente au moins une couche décorative et au moins une couche protectrice agencée au-dessus de la couche décorative ;
c. presser la couche de recouvrement avec la couche de base, dans lequel la couche adhésive est pressée dans la structure multicouche sous l'influence de la chaleur, qui est au moins introduite dans la couche de recouvrement par la presse.

8. Procédé selon la revendication 7, **caractérisé en ce que** le pressage a lieu à des températures comprises entre 150 °C et 220 °C, dans lequel cette température est réglée au niveau de la surface d'une plaque de presse qui est mise en contact avec le panneau.

9. Procédé selon la revendication 7 ou 8, **caractérisé en ce que** ladite température est réglée uniquement sur une seule plaque de presse qui vient en contact avec la couche de recouvrement.

10. Procédé selon l'une des revendications 7 à 9, **caractérisé en ce que** le temps de pressage est de 8 à 30 secondes.

11. Procédé selon l'une des revendications 7 à 10, **caractérisé en ce que** la structure multicouche produite par pressage refroidit pendant au moins 10 secondes immédiatement après retrait à partir de la presse.

12. Procédé selon l'une des revendications 7 à 11, **caractérisé en ce que** la plaque de presse a une structure de surface supérieure qui est transférée dans la couche de recouvrement, dans lequel la structure dans le panneau fini est formée uniquement dans la couche de recouvrement et facultativement en plus dans la couche adhésive.

13. Procédé selon l'une des revendications 7 à 12, **caractérisé en ce qu'**une épaisseur de la couche de recouvrement, en fonction de l'épaisseur et du nombre de couches de couches en cellulose et de la couche protectrice de côté supérieur, est réglée sur 0,1 à 0,5 mm.

14. Procédé selon l'une des revendications 7 à 13, **caractérisé en ce que** la couche protectrice est appliquée sur le côté supérieur de la couche de recouvrement sous forme liquide ou sous forme de poudre avant le pressage.

15. Procédé selon l'une des revendications 7 à 14, **caractérisé en ce que** pour former la couche adhésive, un film ou une poudre des matériaux fusionnés et durcis de la couche adhésive est agencé(e) entre la couche de base et la couche de recouvrement.
